# EUROPÄISCHE PATENTANMELDUNG

(11) **EP 4 831 927 A1**
(43) Veröffentlichungstag der Anmeldung: **28.10.2026**
(21) Anmeldenummer: 25204595.0
(22) Anmeldetag: 25.09.2025
(51) Int. Cl.: G06T 12/10

(54) **ERMITTELN VON KORRIGIERTEN CT-PROJEKTIONSMESSDATEN**

(71) Anmelder: Siemens Healthineers AG, 91301 Forchheim (DE)
(72) Erfinder: Specovius, Andreas, 91301 Forchheim (DE)
(74) Vertreter: Siemens Healthineers Patent Attorneys

(57) **Zusammenfassung**

Es wird ein Verfahren zum Ermitteln von korrigierten CT-Projektionsmessdaten (P_{corr}(φ, c)) beschrieben. Bei dem Verfahren werden CT-Projektionsmessdaten (P(φ, c)) von einem Untersuchungsbereich (ROI), welcher ein Metallobjekt mit einer Längsachse umfasst, empfangen. Es wird ein Korrekturterm (fₖ(φ)) zur Korrektur einer metallartefakterzeugenden Systematik in den empfangenen CT-Projektionsmessdaten (P(φ, c)) ermittelt. Bei dem Ermittlungsprozess wird zunächst der Projektionswinkel (φ_{S}) der empfangenen CT-Projektionsmessdaten (P(φ, c)), der einer zu der Längsachse des Metallobjekts parallelen Projektionsrichtung entspricht, ermittelt. Weiterhin wird der Korrekturterm (fₖ(φ)) auf Basis des Projektionswinkels (φ_{S}) der empfangenen CT-Projektionsmessdaten (P(φ, c)) ermittelt. Schließlich werden korrigierte CT-Projektionsmessdaten (P_{corr}(φ, c)) durch Addition des Korrekturterms (fₖ(φ)) zu den empfangen CT-Projektionsmessdaten (P(φ, c)) ermittelt. Es wird auch eine Korrektureinrichtung (70) beschrieben. Zudem wird ein CT-System (80) beschrieben.

## Beschreibung

Die Erfindung betrifft ein Verfahren zum Ermitteln von korrigierten CT-Projektionsmessdaten. Die Erfindung bezieht sich auch auf ein Verfahren zum Durchführen einer CT-Bildgebung. Zudem betrifft die Erfindung eine Korrektureinrichtung. Weiterhin bezieht sich die Erfindung auf ein CT-System.

Im Rahmen einer computertomographischen Messung durch ein Computertomographiesystem (abgekürzt mit CT-System) werden Objekte im Messfeld bzw. im Untersuchungsbereich von mehreren Blickwinkeln mit Röntgenphotonen durchstrahlt und die am Röntgendetektor ankommenden Röntgenphotonen gezählt. Auf Basis dessen wird die jeweilige Projektion der objektspezifischen Röntgenschwächung ermittelt. Der Röntgendetektor weist quer in z-Richtung (der Richtung der Symmetrieachse des CT-Systems) eine Mehrzahl von Kanälen c auf, mit denen ein Abschnitt des Untersuchungsbereichs in z-Richtung aufgenommen werden kann.

Bei Metallen ist die Röntgenschwächung im relevanten Energiebereich aufgrund der typischerweise großen Kernladungszahlen stark erhöht und zudem stark energieabhängig. Diese Eigenschaften, zusammen mit den im klinischen Kontext üblicherweise stark begrenzten Photonenflüssen, führen zu CT-Projektionsmessdaten, die für unterschiedliche Projektionswinkel nicht mehr konsistent miteinander sind. Aufgrund dieser Inkonsistenz der Projektionsmessdaten werden dann im Rahmen der CT-Bildrekonstruktion sogenannte metall induzierte Bildartefakte erzeugt.

Die Ausprägung der Inkonsistenz hängt typischerweise mit der räumlichen Tiefe des Metalls in der Projektion zusammen. Während für sehr geringe Durchstrahlungslängen meist noch eine lokal verlässliche Messung der Röntgenschwächung möglich ist, erhält man für größere Durchstrahlungslängen systematisch abweichende Messwerte. In der Praxis äußert sich das als Sättigung der Röntgenschwächungsmessung für größere Durchstrahlungslängen durch das Metall.

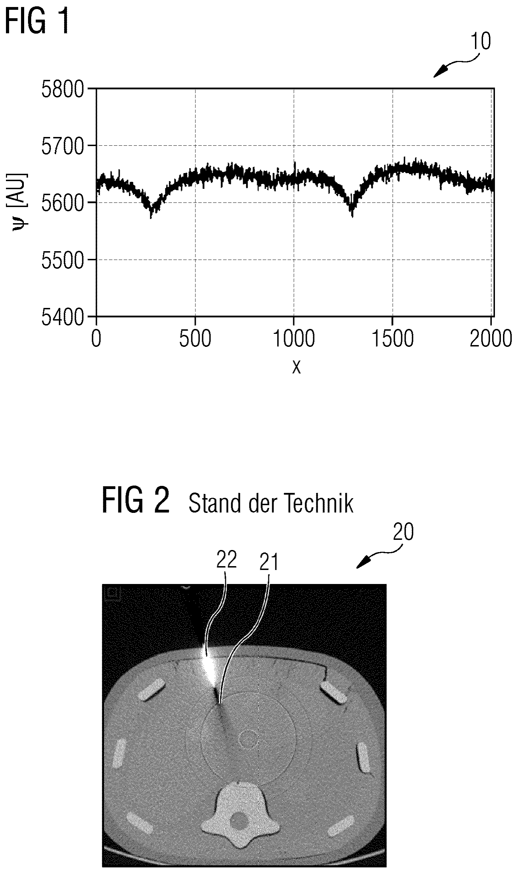

Integriert man die Röntgenschwächung je Projektionsmessung über alle Kanäle des Röntgendetektors, so weisen Projektionen, die das Metall mit großen Durchstrahlungslängen sehen, in logischer Konsequenz weniger Gesamtschwächung auf als andere Projektionen, die das Metall mit kleinen Durchstrahlungslängen sehen. Dieser charakteristische lokale Einbruch der integrierten Röntgenschwächung, auch als lokaler Einbruch der Kanalsumme der Röntgenschwächung bezeichnet, ist in FIG 1 beispielhaft für eine Aufnahme, bei der im Untersuchungsbereich eine Interventionsnadel positioniert ist, dargestellt.

Dieses Phänomen eines lokalen Einbruchs der integrierten Röntgenschwächung wird im folgenden auch Systematik genannt. Die beispielsweise durch ein Metallobjekt zutage tretende Systematik stellt eine systematische Abweichung der integrierten Röntgenschwächung von einem Wert der Röntgenschwächung dar, welchen man ohne Energieabhängigkeit der Röntgenschwächung erhalten würde. Besonders ausgeprägt tritt diese Systematik bei elongierten metallischen Objekten auf. Zu derartigen metallischen Objekten zählen zum Beispiel ein Interventionsbesteck, Ablations- oder Biopsienadeln oder metallische Schrauben. In extremer Ausprägung finden hier die beiden Grenzfälle von (A) sehr kleinen Durchstrahlungslängen von wenigen Millimetern durchs Metall bei Projektionen senkrecht zur langen Achse des Objekts und (B) sehr großen Durchstrahlungslängen von mehreren Zentimetern, teilweise sogar > 10 cm, bei Projektionen entlang der langen Achse des Objekts, statt. Diese geometrische Eigenschaft führt zu einem besonders ausgeprägten lokalen Einbruch der Röntgenschwächungsmessung und der damit einhergehenden, für diese Objekte typischen Ausprägung der Metallartefakte: in der langen Objektachse treten dunkle, lang gezogene Bildartefakte auf, während quer zur langen Objektachse helles Überstrahlen beobachtet wird (siehe FIG 2). Diese Artefakte sind in der Regel besonders kritisch, da die klinisch relevanten Informationen meist direkt "hinter" der langen Objektachse liegen.

Bisherige Maßnahmen zur Artefaktreduktion betrafen die Optimierung von Scanparametern vor der Datenakquisition, wie zum Beispiel die Röhrenspannung und Vorfiltration. Auch wurde versucht, Orientierungen des Objekts im Scanfeld zu vermeiden, die große Durchstrahlungslängen durch das Metall zur Folge haben.

Weiterhin erfolgt bisher die Anwendung von etablierten Algorithmen zur Reduktion von Metallartefakten. Dabei werden Rohdaten in der Metallspur explizit durch Interpolation ersetzt, was zu einem Verlust von Information, besonders in der Umgebung der Metalle, führt. Zudem sind solche Verfahren zur Metallartefaktreduktion in der Regel sehr rechen- und damit zeitintensiv, was ein Problem für die Anwendung während eines interventionellen Eingriffs darstellt, bei der die Bildgebung idealerweise in Echtzeit erfolgen sollte.

Mithin besteht die Aufgabe, CT-Bilddaten mit reduzierten Metallartefakten auch bei höheren Bildfrequenzen bzw. echtzeitnahen Bildgebungsprozessen zu erhalten.

Diese Aufgabe wird durch ein Verfahren zum Ermitteln von korrigierten CT-Projektionsmessdaten gemäß Patentanspruch 1, ein Verfahren zum Durchführen einer CT-Bildgebung gemäß Patentanspruch 11, eine Korrektureinrichtung gemäß Patentanspruch 12 und ein CT-System gemäß Patentanspruch 13 gelöst.

Bei dem erfindungsgemäßen Verfahren zum Ermitteln von korrigierten CT-Projektionsmessdaten P_{corr}(φ, c) werden CT-Projektionsmessdaten P(φ, c) von einem Untersuchungsbereich empfangen, welcher ein Metallobjekt mit einer Längsachse umfasst.

Im Zusammenhang mit dem Begriff der CT-Projektionsmessdaten P(φ, c) werden im Folgenden gelegentlich auch die Begriffe "Röntgenschwächungsdaten" oder "Abschwächungswerte" oder "Röntgenschwächung" oder "Abschwächung" verwendet, welche die von den CT-Projektionsmessdaten P(φ, c) umfassten Messwerte bzw. die diesen Messwerten zugeordnete Schwächung der Röntgenstrahlung wiedergeben. Der Begriff "Abschwächung" wird auch im Zusammenhang mit den Bilddaten verwendet, da in der Regel die Bilddaten Graustufenwerte umfassen, welche die jeweils von einem Punkt des Untersuchungsbereichs erzeugte Abschwächung der Röntgenstrahlung symbolisieren.

Als Längsachse soll in diesem Zusammenhang eine ausgezeichnete Achse durch das Metallobjekt verstanden werden, welche die Längsrichtung des Metallobjekts eindeutig kennzeichnet. Gewöhnlich sind die Abmessungen der Längsachse des Metallobjekts größer als die Abmessungen der Querachse und Hochachse des Objekts. Die CT-Projektionsmessdaten P(φ, c) umfassen die von dem Röntgendetektor eines CT-Systems erfassten Messdaten, welche Projektionen eines vorbestimmten Untersuchungsbereichs aus unterschiedlichen Richtungen bzw. Winkeln bzw. Projektionswinkeln φ umfassen.

Weiterhin wird ein Korrekturterm fₖ(φ) zur Korrektur der durch das Metallobjekt verursachten Systematik bzw. einer metallartefakterzeugenden Systematik in den empfangenen Projektionsmessdaten P(φ, c) ermittelt. Der Korrekturterm fₖ(φ) repräsentiert eine systematische Abweichung von den Abschwächungswerten der CT-Projektionsmessdaten P(φ, c), welche bei der Generierung der CT-Projektionsmessdaten P(φ, c) von dem Untersuchungsbereich ohne artefakterzeugenden Effekte akquiriert würden.

Die Ermittlung des Korrekturterms fₖ(φ) erfolgt auf Basis folgender Teilschritte:
Es wird zunächst ein Projektionswinkel φ_{S} der CT-Projektionsmessdaten P(φ, c) ermittelt, bei dem die größte Beeinflussung durch ein in dem Untersuchungsbereich vorhandenes Metallobjekt zu erwarten ist. Dieser Projektionswinkel φ_{S} entspricht einer zu der Längsachse des Metallobjekts parallelen Projektionsrichtung. Mit anderen Worten ist der Projektionswinkel φ_{S} in Richtung der Längsachse des Metallobjekts orientiert. Bei einem Objekt mit einer Längsachse gibt es in der Regel genau zwei solche Projektionswinkel φ_{S}, die um 180° versetzt sind und die jeweilige Gegenrichtung in Richtung der Längsachse repräsentieren. Der Projektionswinkel φ_{S} kann vorbekannt sein, wenn die Position und Orientierung des Metallobjekts, insbesondere durch Patientendaten oder durch eine Vorabaufnahme, bereits bekannt ist. Wie noch ausführlich erläutert, kann die Position und Orientierung des Metallobjekts auch auf Basis der empfangenen Projektionsmessdaten P(φ, c) direkt ermittelt werden. Hierzu werden vorzugsweise temporäre Bilddaten Iₜₑₘₚ auf Basis der empfangenen Projektionsmessdaten P(φ, c) gewonnen, welche Informationen über die Position und Orientierung des Metallobjekts liefern. Da in dem Untersuchungsbereich auch mehrere Metallobjekte vorhanden sein können, können auch mehr als zwei Projektionswinkel φ_{S} ermittelt werden. In der Regel gibt es aber immer eine geradzahlige Anzahl von Projektionswinkeln φ_{S} in Richtung der Längsachsen der Objekte.

Wie bereits erwähnt, umfasst das vorhandene metallische Objekt ein metallisches Objekt mit einer definierten Längsachse, vorzugsweise einer ausgeprägten Längsachse, besonders bevorzugt ein längliches, insbesondere längliches zylinderförmiges oder ein nadelförmiges metallisches Objekt, besonders bevorzugt ein Interventionsbesteck oder eine Ablationsnadel oder eine Biopsienadel oder eine metallische Schraube, insbesondere zur Anwendung in der Medizin. Es können auch eine Mehrzahl von derartigen metallischen Objekten in dem Untersuchungsbereich vorliegen und hinsichtlich deren Position und Orientierung detektiert werden.

Der bereits erwähnte Korrekturterm fₖ(φ) wird auf Basis des Projektionswinkels φ_{S}, d.h. des ausgezeichneten Projektionswinkels φ_{S}, welcher einer zu der Längsachse des Metallobjekts parallelen Projektionsrichtung entspricht, der empfangenen CT-Projektionsmessdaten P(φ, c) ermittelt. Dabei erfolgt vorzugsweise eine Ermittlung des Korrekturterms fₖ(φ) durch einen Vergleich einer auf den empfangenen CT-Projektionsmessdaten P(φ, c) basierenden winkelabhängigen Funktion in einem Projektionswinkelbereich um den ausgezeichneten Projektionswinkel φ_{S} herum mit einer modellierten und korrigierten winkelabhängigen Funktion in diesem Bereich.

Wie später noch ausführlich beschrieben, wird bevorzugt zur Erzeugung des Korrekturterms fₖ(φ) = f(φ)*W(φ, c) eine analytische Funktion f(φ) der Systematik mit einer Verteilungsvorschrift bzw. einem Gewichtungsfaktor W(φ, c) multipliziert, die bzw. der beschreibt, wie sich die Systematik auf die Kanäle des Projektionswinkels φ verteilt. In bevorzugter Ausprägung wird angenommen, dass sich die Systematik proportional zur Durchstrahlungslänge verteilt.

Schließlich werden korrigierte CT-Projektionsmessdaten P_{corr}(φ, c) durch Addition des Korrekturterms fₖ(φ) zu den empfangenen CT-Projektionsmessdaten P(φ, c) ermittelt.

Vorteilhaft werden durch die Kompensation in den empfangenen CT-Projektionsmessdaten P(φ, c) bei einer späteren Rekonstruktion von Bilddaten auf Basis der empfangenen CT-Projektionsmessdaten P(φ, c) Metallartefakte, insbesondere Metallartefakte von Metallobjekten mit hohem Aspektverhältnis, vorzugsweise mit einer ausgeprägten Längsachse, also Metallartefakte von Metallobjekten, die eine eindeutige Orientierung aufweisen, kompensiert. Aufgrund des vergleichsweise geringen Rechenaufwands für die Korrektur der Artefakte eignet sich das erfindungsgemäße Verfahren auch für die Artefaktkorrektur von Echtzeitbildern bzw. 4D-Bilddaten bzw. der diesen zugeordneten CT-Projektionsmessdaten bei der CT-Bildgebung. Im Gegensatz zu herkömmlichen Artefaktkorrekturalgorithmen erfolgt bei dem erfindungsgemäßen Vorgehen keine Ersetzung von Rohdaten mit dem damit einhergehenden Verlust von Bildinformation. Stattdessen erfolgt eine lokale, gezielte, systematikgesteuerte Inkonsistenzreduktion im Projektionsmessdatenraum um den ausgezeichneten Projektionswinkel φ_{S} herum.

Bei dem erfindungsgemäßen Verfahren zum Durchführen einer CT-Bildgebung werden CT-Projektionsmessdaten P(φ, c) von einem Untersuchungsbereich akquiriert und es wird das erfindungsgemäße Verfahren zum Ermitteln von korrigierten CT-Projektionsmessdaten P_{corr}(φ, c) auf Basis dieser akquirierten CT-Projektionsmessdaten P(φ, c) als die empfangenen CT-Projektionsmessdaten P(φ, c) durchgeführt.

Schließlich erfolgt eine Rekonstruktion von artefaktreduzierten CT-Bilddaten auf Basis der korrigierten CT-Projektionsmessdaten P_{corr}(φ, c). Vorteilhaft wird die Bildqualität von CT-Bilddaten, welche ein Metallobjekt, insbesondere ein Metallobjekt mit einer ausgeprägten Längsachse darstellen, bei einer CT-Bildgebung auf die vorstehend erläuterte Art und Weise verbessert.

Die erfindungsgemäße Korrektureinrichtung weist eine Eingangsschnittstelle zum Empfangen von zuvor irgendwann akquirierten CT-Projektionsmessdaten P(φ, c) von einem Untersuchungsbereich auf. Die erfindungsgemäße Korrektureinrichtung dient dazu, Metallartefakte von Metallobjekten, welche vorzugsweise eine ausgeprägte Längsachse aufweisen, zu korrigieren.

Teil der erfindungsgemäßen Korrektureinrichtung ist eine Korrektureinheit zum Ermitteln eines Korrekturterms fₖ(φ) zur Korrektur von metallartefakterzeugenden Dateninkonsistenzen bzw. einer metallartefakterzeugenden Systematik in den empfangenen CT-Projektionsmessdaten P(φ, c). Die Ermittlung des Korrekturterms fₖ(φ) erfolgt auf Basis der Kenntnis eines ausgezeichneten Projektionswinkels φ_{S} der CT-Projektionsmessdaten P(φ, c), der einer zu der Längsachse des Metallobjekts parallelen Projektionsrichtung entspricht.

Daher umfasst die Korrektureinheit eine Winkelfestlegungseinheit zum Ermitteln des ausgezeichneten Projektionswinkels φ_{S} der CT-Projektionsmessdaten P(φ, c).

Die erfindungsgemäße Korrektureinheit umfasst auch eine Korrekturtermeinheit zum Ermitteln des Korrekturterms fₖ(φ) auf Basis des ausgezeichneten Projektionswinkels φ_{S} der CT-Projektionsmessdaten P(φ, c).

Weiterhin umfasst die erfindungsgemäße Korrektureinrichtung eine Additionseinheit zum Ermitteln von korrigierten CT-Projektionsmessdaten P_{corr}(φ, c) durch Addition des Korrekturterms fₖ(φ) zu den empfangenen CT-Projektionsmessdaten P(φ, c). Die erfindungsgemäße Korrektureinrichtung teilt die Vorteile des erfindungsgemäßen Verfahrens zum Ermitteln von korrigierten CT-Projektionsmessdaten P_{corr}(φ, c).

Das erfindungsgemäße CT-System weist eine Scaneinheit zum Akquirieren von CT-Projektionsmessdaten P(φ, c) von einem Untersuchungsbereich auf. Teil des erfindungsgemäßen CT-Systems sind auch eine Steuerungseinrichtung zum Ansteuern der Scaneinheit und eine erfindungsgemäße Korrektureinrichtung zur Gewinnung von korrigierten CT-Projektionsmessdaten P_{corr}(φ, c) auf Basis der von der Scaneinheit akquirierten CT-Projektionsmessdaten P(φ, c) als empfangene CT-Projektionsmessdaten P(φ, c). Das erfindungsgemäße CT-System teilt die Vorteile der erfindungsgemäßen Korrektureinrichtung.

Ein Großteil der zuvor genannten Komponenten der erfindungsgemäßen Korrektureinrichtung kann ganz oder teilweise in Form von Softwaremodulen in einem Prozessor eines entsprechenden Rechensystems realisiert werden, z. B. von einer Steuereinrichtung eines CT-Systems oder einem Computer, der zur Steuerung eines solchen Systems genutzt wird. Eine weitgehend softwaremäßige Realisierung hat den Vorteil, dass auch schon bisher verwendete Rechensysteme auf einfache Weise durch ein Software-Update nachgerüstet werden können, um auf die erfindungsgemäße Weise zu arbeiten.

Insofern wird die Aufgabe auch durch ein entsprechendes Computerprogrammprodukt mit einem Computerprogramm gelöst, welches direkt in ein Rechensystem, insbesondere eines CT-Systems, ladbar ist, mit Programmabschnitten, um die Schritte des erfindungsgemäßen Verfahrens zum Ermitteln von korrigierten CT-Projektionsmessdaten P_{corr}(φ, c), insbesondere die Schritte zum Ermitteln eines Korrekturterms fₖ(φ) zur Korrektur einer metallartefakterzeugenden Systematik in den empfangenen CT-Projektionsmessdaten P(φ, c), und den Schritt zum Ermitteln von korrigierten CT-Projektionsmessdaten P_{corr}(φ, c), auszuführen, wenn das Programm in dem Rechensystem ausgeführt wird. Ein solches Computerprogrammprodukt kann neben dem Computerprogramm gegebenenfalls zusätzliche Bestandteile wie z. B. eine Dokumentation und/oder zusätzliche Komponenten, auch Hardware-Komponenten, wie z.B. Hardware-Schlüssel (Dongles etc.) zur Nutzung der Software, umfassen.

Zum Transport zum Rechensystem und/oder zur Speicherung an oder in dem Rechensystem kann ein computerlesbares Medium, z. B. ein Memorystick, eine Festplatte oder ein sonstiger transportabler oder fest eingebauter Datenträger dienen, auf welchem die von einem Rechensystem einlesbaren und ausführbaren Programmabschnitte des Computerprogramms gespeichert sind. Das Rechensystem kann z. B. hierzu einen oder mehrere zusammenarbeitende Mikroprozessoren oder dergleichen aufweisen.

Die abhängigen Ansprüche sowie die nachfolgende Beschreibung enthalten jeweils besonders vorteilhafte Ausgestaltungen und Weiterbildungen der Erfindung. Dabei können insbesondere die Ansprüche einer Anspruchskategorie auch analog zu den abhängigen Ansprüchen einer anderen Anspruchskategorie weitergebildet sein. Zudem können im Rahmen der Erfindung die verschiedenen Merkmale unterschiedlicher Ausführungsbeispiele und Ansprüche auch zu neuen Ausführungsbeispielen kombiniert werden.

Hierzu wird zunächst ein Projektionswinkelbereich b um den Projektionswinkel φ_{S} herum festgelegt, mit einem ersten Randwinkel φ₀ und einem zweiten Randwinkel φ₁.

Weiterhin wird ein Wert einer sogenannten winkelabhängigen initialen Kanalsumme ψ(φ) der eingangs empfangenen CT-Projektionsmessdaten P(φ, c) über alle Kanäle c zumindest für den vorgenannten ersten Randwinkel φ₀ und den zweiten Randwinkel φ₁ sowie mindestens für einen innerhalb des festgelegten Projektionswinkelbereichs b vorliegenden Projektionswinkel φ ermittelt.

In anderen Worten wird eine initiale Kanalsumme ψ(φ) der empfangenen CT-Projektionsmessdaten P(φ, c) für jeweils eine Anzahl von Projektionswinkeln φ innerhalb des festgelegten Projektionswinkelbereichs b ermittelt, wobei zumindest ein erster Kanalsummen-Randwert ψ(φ₀) der initialen Kanalsumme ψ(φ) für den ersten Randwinkel φ und ein zweiter Kanalsummen-Randwert ψ(φ₁) der initialen Kanalsumme ψ(φ) für den zweiten Randwinkel φ₁ sowie zumindest ein Wert der initialen Kanalsumme ψ(φ) für einen Projektionswinkel φ zwischen dem ersten Randwinkel φ₀ und dem zweiten Randwinkel φ₁ ermittelt wird.

Bevorzugt wird die winkelabhängige initiale Kanalsumme ψ(φ) auch für den ausgezeichneten Projektionswinkel φₛ ermittelt, für den ein Minimum der winkelabhängigen initialen Kanalsumme ψ(φ) zu erwarten ist und der daher besonders charakteristisch für die Metallartefakte ist. Für allgemeine Winkel φ hat die initiale Kanalsumme ψ(φ) folgende Gestalt: $ψ \left(φ\right) = {\sum }_{c} P \left(φ, c\right) .$ (1)

Die initiale Kanalsumme ψ(φ) repräsentiert gerade die Summe aller empfangenen CT-Projektionsmessdaten P(φ, c) für alle Kanäle c für einen Projektionswinkel φ.

Besonders bevorzugt wird die initiale Kanalsumme ψ(φ) für alle in dem Projektionswinkelbereich b vorhandenen Projektionswinkel φ ermittelt, um eine möglichst exakte Abbildung der in dem Projektionswinkelbereich b auftretenden Systematik zu erhalten.

Die Werte der initialen Kanalsumme ψ(φ) für die Randwinkel φ₀, φ₁ bilden einen ersten Randwert ψ(φ₀) der initialen Kanalsumme ψ(φ), auch als erster Kanalsummen-Randwert ψ(φ₀) bezeichnet, und einen zweiten Randwert ψ(φ₁) der initialen Kanalsumme ψ(φ), auch als zweiter Kanalsummen-Randwert ψ(φ₁) bezeichnet.

Dabei erstreckt sich der Projektionswinkelbereich b von dem ersten Randwinkel φ₀ = φₛ - Δφ bis zu dem zweiten Randwinkel φ₁ = φₛ + Δφ. Der Wert Δφ beschreibt gerade die halbe Breite des Projektionswinkelbereichs b. Die Festlegung des Projektionswinkelbereich b erfolgt auf Basis von Vorabinformationen über die Ausdehnung der systematischen Abweichung der Röntgenschwächung der CT-Projektionsmessdaten P(φ, c) von einer artefaktfreien Röntgenschwächung über einen bestimmten Winkelbereich der Projektionswinkel φ. Der Projektionswinkelbereich b definiert den Winkelbereich, für den eine Systematik, d.h. eine Abweichung der initialen Kanalsumme ψ(φ) von einem systematikfreien Abschwächungswert, zu erwarten ist. Der Projektionswinkelbereich b lässt sich empirisch ermitteln.

Außerdem wird bei dieser besonders bevorzugten Ausgestaltung eine systematikfreie Kanalsumme ψₖ(φ) auf Basis einer Interpolation, welche auf Basis des ersten und des zweiten Kanalsummen-Randwerts ψ(φ₀), ψ(φ₁) erfolgt, ermittelt. Im einfachsten Fall werden die beiden Kanalsummen-Randwerte ψ(φ₀), ψ(φ₁) direkt als Eingangswerte für die Interpolation genutzt. Wie später noch erläutert, können die Eingangswerte bzw. Kanalsummen-Randwerte ψ(φ₀), ψ(φ₁) auch vorher gefiltert bzw. gemittelt werden und die gefilterten bzw. gemittelten Eingangswerte bzw. Randwerte als Eingangswerte für die Interpolation genutzt werden. Die Interpolation umfasst vorzugsweise eine lineare Interpolation. Die systematikfreie Kanalsumme ψₖ(φ) gleicht anschaulich gesprochen die Abweichung der Abschwächungswerte von Abschwächungswerten, welche ohne artefakterzeugende Systematik gemessen würden, in dem ermittelten Projektionswinkelbereich b aus.

In einer besonders bevorzugten Ausgestaltung des erfindungsgemäßen Verfahrens zum Ermitteln von korrigierten CT-Projektionsmessdaten P_{corr}(φ, c) wird im Rahmen der Berechnung des Korrekturterms fₖ(φ) ein Differenzterm Δψ(φ) ermittelt, welcher eine systematischen Abweichung der Röntgenschwächung der CT-Projektionsmessdaten P(φ, c) von einer systematikfreien Röntgenschwächung repräsentiert, die sich aus der Beeinflussung der CT-Projektionsmessdaten P(φ, c) durch das Metallobjekt bei diesem Projektionswinkel φ_{S} und darum herum ergibt, welche wie erwähnt auch als Systematik bezeichnet wird.

Der Differenzterm Δψ(φ) wird also durch eine Differenzbildung ermittelt, welche auf der winkelabhängigen initialen Kanalsumme ψ(φ) und der systematikfreien Kanalsumme ψₖ(φ) als Eingangsgrößen basiert. Wie bereits bei der Interpolation, können für die Differenzbildung als Eingangsgrößen auch gefilterte bzw. gemittelte Größen verwendet werden. Wie bereits erwähnt, wird der Korrekturterm fₖ(φ) schließlich auf Basis des Differenzterms Δψ(φ) ermittelt.

Vorteilhaft wird die artefakterzeugende systematische Abweichung der Abschwächungswerte im Bereich des ausgezeichneten Projektionswinkels φₛ durch eine Interpolation zwischen den Kanalsummen-Randwerten ψ(φ₀), ψ(φ₁) der initialen Kanalsumme ψ(φ) in dem Projektionswinkelbereich b und durch einen Vergleich des Ergebnisses der Interpolation mit den in dem Projektionswinkelbereich b tatsächlich gemessenen bzw. ermittelten Werten der initialen Kanalsumme ψ(φ) auf einfache Weise abgeschätzt. Dabei wird die durch die möglicherweise unterschiedlichen Kanalsummen-Randwerte ψ(φ₀), ψ(φ₁) wiedergespiegelte Überlagerung von sinusförmigen Schwankungen der Abschwächungswerte in Abhängigkeit vom Projektionswinkel φ vorteilhaft mitberücksichtigt, so dass die Korrektur eine realistische Näherung für systematikfreie Abschwächungswerte für die Projektionen im Bereich des ausgezeichneten Projektionswinkels φₛ liefert.

Wie bereits erwähnt, erfolgt bei dem erfindungsgemäßen Verfahren zum Ermitteln von korrigierten CT-Projektionsmessdaten P_{corr}(φ, c) bei dem Schritt zum Ermitteln eines Korrekturterms fₖ(φ) zunächst eine Ermittlung eines ausgezeichneten Projektionswinkels φ_{S}, der einer zu der Längsachse des Metallobjekts parallelen Projektionsrichtung entspricht. In einer besonders bevorzugten Variante des erfindungsgemäßen Verfahrens zum Ermitteln von korrigierten CT-Projektionsmessdaten P_{corr}(φ, c) wird nun im Zusammenhang mit dem Schritt zur Ermittlung des Korrekturterms fₖ(φ) bei dem Teilschritt zur Ermittlung des ausgezeichneten Projektionswinkels φ_{S} die Information über den Projektionswinkel φ_{S} auf der Basis von temporären Bilddaten Iₜₑₘₚ gewonnen. Wie bereits angedeutet, können die temporären Bilddaten Iₜₑₘₚ direkt auf Basis der empfangenen CT-Projektionsmessdaten P(φ, c) gewonnen werden, welche Information über die Position und Orientierung des Metallobjekts liefern. Die temporären Bilddaten Iₜₑₘₚ können aber auch auf Basis von älteren Bildinformationen über den durch das CT-System abzubildenden Untersuchungsbereich gewonnen werden. Vorteilhaft können aufgrund der temporären Bilddaten oder der Bildinformationen sehr präzise Daten über die Position und Lage des Metallobjekts in dem Untersuchungsbereich gewonnen werden.

Dabei umfasst das Ermitteln des ausgezeichneten Projektionswinkels φ_{S} vorzugsweise den Schritt der Rekonstruktion der temporären Bilddaten Iₜₑₘₚ. Diese temporären Bilddaten Iₜₑₘₚ werden auf Basis der empfangenen Projektionsmessdaten P(φ, c) auf die übliche Art und Weise rekonstruiert. Beispielsweise wird dazu auf die empfangenen Projektionsmessdaten P(φ, c) eine gefilterte Rückprojektion angewendet. Die temporären Bilddaten Iₜₑₘₚ weisen zwar noch Metallartefakte auf, liefern aber wertvolle Information über die Position und die Orientierung des Metallobjekts im Untersuchungsbereich.

Bevorzugt erfolgt die Ermittlung des ausgezeichneten Projektionswinkels φ_{S} durch eine Kl-basierte Ermittlung des ausgezeichneten Projektionswinkels φ_{S} auf Basis der temporären Bilddaten Iₜₑₘₚ("KI" steht dabei für "Künstliche Intelligenz", also ein trainierbares, mit einem künstlichen neuronalen Netzwerk realisiertes Verfahren zur Ermittlung des Projektionswinkels φ_{S}). Dabei können als Trainingsdaten gelabelte Bilddaten mit Metallartefakten, insbesondere die oben erwähnten temporären Bilddaten Iₜₑₘₚ, verwendet werden, zu denen die Orientierung des ausgezeichneten Projektionswinkels φ_{S} bereits bekannt ist. In einem Trainingsprozess erfolgt eine Adaption des künstlichen neuronalen Netzwerks, wobei die Bilddaten als Eingangsdaten und die bekannten Orientierungen des jeweiligen ausgezeichneten Projektionswinkels φ_{S} als Zieldaten verwendet werden. Vorteilhaft muss für die Ermittlung des ausgezeichneten Projektionswinkels φ_{S} keine Rechenformel oder ein fest verdrahteter Algorithmus entwickelt werden. Vielmehr bildet sich der Algorithmus durch das vorbeschriebene Trainingsverfahren selbst.

Ebenfalls bevorzugt umfasst das Ermitteln des ausgezeichneten Projektionswinkels φ_{S} eine Segmentierung des Metallobjekts im Bilddatenraum auf Basis der temporären Bilddaten Iₜₑₘₚ, wobei eine Metall-Bildmaske Q, vorzugsweise eine binäre Metall-Bildmaske Q, im Bilddatenraum erzeugt wird. Mit Hilfe der segmentierten Metall-Bildmaske Q werden exaktere Informationen über die Position und Orientierung des Metallobjekts ermittelt. Bei der Ermittlung der Metall-Bildmaske Q im Bilddatenraum werden vorzugsweise Informationen über die Gestalt und die Abmessungen des Metallobjekts genutzt. Alternativ oder zusätzlich erfolgt ein Ermitteln einer binären Metall-Bildmaske Q eines Metallobjekts auf Basis der temporären Bilddaten Iₜₑₘₚ. Bei dieser Variante wird vorteilhaft der Umstand genutzt, dass die Metallartefakte um das abgebildete Metallobjekt möglicherweise eine im Vergleich zu dem Metallobjekt reduzierte Schwächung aufweisen und deren Schwächungswerte unterhalb der Schwächungswerte des Metallobjekts selbst liegen, so dass durch Schwellwertbildung die Artefakte bei der Bildung der binären Metall-Bildmaske Q unterdrückt werden können. Auf Basis der segmentierten binären Metall-Bildmaske Q lässt sich nun der ausgezeichnete Projektionswinkel φ_{S}, direkt durch eine Anwendung einer Optimierung ermitteln, wobei rechnerisch eine Gerade durch die Metall-Bildmaske Q gelegt wird, derart, dass die Teilmenge der von der Gerade innerhalb der Metall-Bildmaske Q überdeckten Pixel maximal ist.

Möchte man die Ermittlung des ausgezeichneten Projektionswinkels φ_{S} noch weiter präzisieren, so kann man auch eine Metall-Sinogrammmaske M(φ, c), vorzugsweise eine binäre Metall-Sinogrammmaske M(φ, c), im Projektionsmessdatenraum generieren. Hierzu erfolgt vorzugsweise zunächst ein Vorwärtsprojizieren der Metall-Bildmaske Q in den Projektionsmessdatenraum, wobei ein Sinogramm erzeugt wird, welches eine Durchstrahlungslänge D(φ, c) des Metallobjekts wiedergibt. Anschließend wird die Metall-Sinogrammmaske M(φ, c) in dem Sinogramm selbst ermittelt. Auch hier kann die Metall-Sinogrammmaske M(φ, c) durch eine geschickte Schwellwertbildung ermittelt werden und das Ermitteln von CT-Projektionsmessdaten, welche den Schwellwert überschreiten, dazu genutzt werden, die Metall-Sinogrammmaske M(φ, c) zu definieren.

Die Ermittlung der Metall-Sinogrammmaske M(φ, c) bietet nun vorteilhaft die Möglichkeit, die Orientierung des Metallobjekts in den Projektionsmessdaten direkt rechnerisch durch Aufsummieren der Sinogrammpixel der Metall-Sinogrammmaske M(φ, c) und eine Minimumbildung zu gewinnen. Dabei erfolgt zunächst das Ermitteln der Anzahl N(φ) = ∑_{c} M(φ, c) der Sinogrammpixel je Projektionswinkel φ, die Metall maskieren, und weiter ein Ermitteln des Projektionswinkels φ_{S} der CT-Projektionsmessdaten P(φ, c) in Längsrichtung des Metallobjekts für den Winkel, der die geringste Zahl von maskierten Sinogrammpixeln umfasst. Vorteilhaft wird der ausgezeichnete Projektionswinkel φ_{S} der CT-Projektionsmessdaten P(φ, c) so besonders exakt und verlässlich ermittelt.

Kombiniert man die vorstehend genannten Teilschritte zum Ermitteln des ausgezeichneten Projektionswinkels φ_{S}, so umfasst das Ermitteln des ausgezeichneten Projektionswinkels φ_{S} die folgenden Schritte:
- Ermitteln einer binären Metall-Bildmaske Q eines Metallobjekts auf Basis der temporären Bilddaten Iₜₑₘₚ,
- Vorwärtsprojizieren der binären Metall-Bildmaske Q in den Projektionsmessdatenraum, wobei ein Sinogramm erzeugt wird, welches eine Durchstrahlungslänge D(φ, c) des Metallobjekts wiedergibt,
- Ermitteln einer binären Metall-Sinogrammmaske M(φ, c) in dem Sinogramm,
- Ermitteln der Anzahl N(φ) = Σ_{c} M(φ, c) der Sinogrammpixel je Projektionswinkel φ, die Metall maskieren,
- Ermitteln des ausgezeichneten Projektionswinkels φ_{S} der CT-Projektionsmessdaten P(φ, c) in Längsrichtung des Metallobjekts für den Winkel, der die geringste Zahl von maskierten Sinogrammpixeln umfasst.

Bei der vorstehend genannten Variante wird der ausgezeichnete Projektionswinkel φ_{S} der CT-Projektionsmessdaten P(φ, c) also nicht direkt aus den temporären Bilddaten Iₜₑₘₚ gewonnen, sondern die temporären Bilddaten Iₜₑₘₚ werden zunächst dazu genutzt, um die Position, Abmessungen und Orientierung des Metallobjekts im Bilddatenraum zu ermitteln. Diese Informationen werden nachfolgend dazu genutzt, eine binäre Metall-Bildmaske Q zu erstellen, die den Bereich im Bilddatenraum segmentiert, der von dem Metallobjekt ausgefüllt wird. "Binär" bedeutet in diesem Zusammenhang, dass ein abrupter Übergang zwischen dem Maskenbereich und der Umgebung erfolgt und nur Werte "1" oder "0" für die Abschwächung angenommen werden können. Das Vorwärtsprojizieren der binären Metall-Bildmaske Q in den Projektionsmessdatenraum erlaubt das Generieren einer binären Metall-Sinogrammmaske M(φ, c) in einem Sinogramm, welche nun Auskunft darüber gibt, wieviel der Sinogrammpixel bzw. welche Anzahl N(φ) von Pixeln im Projektionsmessdatenraum je Projektionswinkel φ von der binären Metall-Sinogrammmaske M(φ, c) abgedeckt werden. Der Projektionswinkel φ_{S} der CT-Projektionsmessdaten P(φ, c) in Längsrichtung des Metallobjekts ist schließlich genau durch den Winkel bzw. Projektionswinkel gegeben, in dem das Sinogramm am wenigsten Maskenpixel der binären Metall-Sinogrammmaske M(φ, c) aufweist. ${φ}_{s} = {argmin}_{φ} \left(N\left(φ\right)\right) .$ (2)

Vorteilhaft kann der ausgezeichnete Projektionswinkel φ_{S} der CT-Projektionsmessdaten, der einer zu der Längsachse des Metallobjekts parallelen Projektionsrichtung entspricht, rechnerisch durch eine Ermittlung eines Minimums ermittelt werden.

In einer bevorzugten Variante des erfindungsgemäßen Verfahrens zum Ermitteln von korrigierten CT-Projektionsmessdaten wird die binäre Metall-Bildmaske Q in den temporären Bilddaten Iₜₑₘₚ dadurch ermittelt, dass Bilddatenpixel, deren Abschwächung, auch als Schwächungswert beizeichnet, oberhalb von einem vorbestimmten Schwellwert liegt, der Wert "1" zugewiesen wird, und Bilddatenpixeln, deren Abschwächung unterhalb von dem vorbestimmten Schwellwert liegt, der Wert "0" zugewiesen wird. Vorteilhaft werden aufgrund der binären Definition der Metall-Bildmaske Q die Umrisse des Metallobjekts exakt in den Projektionsmessdatenraum übertragen, wobei nur Bilddatenpixel mit dem Wert "1" berücksichtigt werden.

In einer bevorzugten Variante des erfindungsgemäßen Verfahrens zum Ermitteln von korrigierten CT-Projektionsmessdaten wird die binäre Metall-Sinogrammmaske M(φ, c) in dem Sinogramm dadurch ermittelt, dass Sinogrammpixel, deren Abschwächung oberhalb von einem vorbestimmten Schwellwert liegt, der Wert "1" zugewiesen wird, und Sinogrammpixeln, deren Abschwächung unterhalb von dem vorbestimmten Schwellwert liegt, der Wert "0" zugewiesen wird. Vorteilhaft kann aufgrund der binären Zuordnung auch im Sinogramm eine exakte Segmentierung der dem Metallobjekt zuzuordnenden Sinogrammpixel vorgenommen werden.

In einer besonders bevorzugten Variante des erfindungsgemäßen Verfahrens zum Ermitteln von korrigierten CT-Projektionsmessdaten P_{corr}(φ, c) wird vorzugsweise bei der Ermittlung der Systematik bzw. nach der Ermittlung des ausgezeichneten Projektionswinkels φₛ der CT-Projektionsmessdaten P(φ, c) der Projektionswinkelbereich b auf Basis empirischer Daten und vorzugsweise der initialen Kanalsumme ψ(φ) der CT-Projektionsmessdaten P(φ, c) festgelegt. Die empirischen Daten umfassen Informationen über eine Korrelation zwischen den Maßen des Metallobjekts und den durch diese Maße bewirkten Ausmaßen des Projektionswinkelbereichs b.

Der Projektionswinkelbereich b sollte so groß wie nötig und gleichzeitig so klein wie möglich gewählt werden. Dicke Metallobjekte benötigen größere Projektionswinkelbereiche b als dünnere Metallobjekte. Es kann auch die Steigung des Einbruchs der Abschwächung im Bereich um den ausgezeichneten Projektionswinkel φ_{S} in der initialen Kanalsumme ψ(φ) für die Festlegung der Ausmaße des Projektionswinkelbereichs b verwendet werden. Die Grenzen des Projektionswinkelbereichs b werden dort positioniert, wo der Betrag der Steigung des Einbruchs einen vorbestimmten Schwellenwert erreicht bzw. von dem Projektionswinkel φ_{S} aus gesehen diesen Schwellenwert unterschreitet.

In einer besonders bevorzugten Variante des erfindungsgemäßen Verfahrens zum Ermitteln von korrigierten CT-Projektionsmessdaten P_{corr}(φ, c) wird vorzugsweise bei der Ermittlung der Systematik bzw. der Ermittlung eines Korrekturterms fₖ(φ) nach der Ermittlung der winkelabhängigen initialen Kanalsumme ψ(φ) die winkelabhängige initiale Kanalsumme ψ(φ) durch eine Faltung, d.h. eine mathematische Faltung, mit einer Filterfunktion, bevorzugt mit einer Gauß-Filterfunktion G, geglättet, wobei eine gefilterte bzw. gemittelte Kanalsumme $\overline{ψ} \left(φ\right) = G \left\{ψ\left(φ\right)\right\}$ (3) ermittelt wird. "Gemittelt" soll also bedeuteten, dass die initiale Kanalsumme über den Winkel φ gemittelt wird. Dabei kann zur Mittelung mit der erwähnten Filterfunktion G eine gleitende Mittelung der winkelabhängigen initialen Kanalsumme ψ(φ) über einen Filterabschnitt Δφ vorgenommen werden. Durch diese Mittelung der Werte der winkelabhängen initialen Kanalsumme ψ(φ) werden Rauscheffekte aufgrund der Messung bei der Akquisition CT-Projektionsmessdaten P(φ, c) und deren Verarbeitung kompensiert und die Zuverlässigkeit der nachfolgenden Schritte verbessert. Anschaulich ausgedrückt, erfolgt bei der Mittelung eine Art Tiefpassfilterung, um die initiale Kanalsumme von hochfrequenten Störeffekten zu befreien. Als Gauß-Filterfunktion soll ein Frequenzfilter verstanden werden, bei dem sowohl die Übertragungsfunktion als auch die Impulsantwort den Verlauf einer Gauß-Glockenkurve aufweist.

Ebenfalls besonders bevorzugt wird bei dem erfindungsgemäßen Verfahren zum Ermitteln von korrigierten CT-Projektionsmessdaten P_{corr}(φ, c) bei den Schritten zum Ermitteln eines Korrekturterms fₖ(φ) bei der Ermittlung der systematikfreien Kanalsumme ψₖ(φ) die Interpolation nicht direkt auf Basis des ersten Randwerts ψ(φ₀) und des zweiten Randwerts, ψ(φ₁) vorgenommen, sondern auf Basis von ersten und zweiten gemittelten bzw. gefilterten Randwerten ψ̅(φ₀), ψ̅(φ₁), welche nach der Gleichung (3) auf Basis des ersten Randwerts ψ(φ₀) und des zweiten Randwerts ψ(φ₁) ermittelt werden. Bevorzugt umfasst die angewandte Interpolation eine rechnerisch besonders einfache lineare Interpolation. Die gemittelten bzw. gefilterten Randwerte ψ̅(φ₀), ψ̅(φ₁) werden ebenfalls bevorzugt durch einen mathematischen Filterprozess gewonnen, vorzugsweise durch eine Anwendung einer Gauß-Filterfunktion.

Die Ermittlung der sytematikfreien Kanalsumme ψₖ(φ) erfolgt dann durch eine Interpolation, vorzugsweise eine lineare Interpolation, zwischen dem ersten gemittelten Randwert ψ̅(φ₀) und dem zweiten gemittelten Randwert ψ̅(φ₁). Die Werte der systematikfreien Kanalsumme ψₖ(φ) liegen also aufgrund der Interpolation vorzugsweise zwischen den Werten der gemittelten Randwerte ψ̅(φ₀), ψ(φ₁) .

Ebenfalls bevorzugt wird bei dem erfindungsgemäßen Verfahren zum Ermitteln von korrigierten CT-Projektionsmessdaten P_{corr}(φ, c) bei den Schritten zum Ermitteln eines Korrekturterms fₖ(φ) durch Differenzbildung die Differenzbildung durch eine Differenz bzw. einen Differenzterm Δψ(φ) zwischen der gefilterten Kanalsumme ψ̅(φ) und der systematikfreien Kanalsumme ψₖ(φ), welche ebenfalls vorzugsweise, wie vorstehend erläutert, auf Basis der gefilterten Randwerte ψ̅(φ₀), ψ̅(φ₁) ermittelt wurde.

Wie bereits erwähnt, wird der Korrekturterm fₖ(φ) vorzugsweise durch eine modellhafte Nachbildung des Differenzterms Δψ(φ) ermittelt. Vorzugsweise wird dabei der Korrekturterm fₖ(φ) durch eine analytische Funktion f(φ) modelliert und umfasst bevorzugt diese analytische Funktion f(φ). Durch die Modellierung des Korrekturterms fₖ(φ) wird die Robustheit der Schätzung der Systematik erhöht. Betrachtet man ein längliches, insbesondere nadelförmiges Objekt aus unterschiedlichen Projektionswinkeln, so fällt die Durchstrahlungslänge ausgehend von der Längsachse annähernd kosinusförmig ab, was durch die folgende analytische Funktion f(φ) repräsentiert wird: $f \left(φ\right) = {θ}_{0} ⋅ \left(1-\left|sin\left(\left(φ-{θ}_{1}\right)⋅{θ}_{2}\right)\right|\right) .$ (4)

Die Parameter θ₀, θ₁, θ₂ sind so zu wählen, dass das Modell die Systematik bzw. den Differenzterm Δψ(φ) adäquat beschreibt. Vorzugsweise sollte θ₁ ≈ φₛ gelten.

Im einfachsten, aber rechenintensivsten Fall würde man die Parameter θ₀ und θ₂ mittels eines Fitverfahrens bestimmen. Schneller geht es allerdings, indem man die Verteilung der analytischen Funktion f(φ) analysiert. So lässt sich der Parameter θ₂ aus der Breite der analytischen Funktion f(φ) bestimmen, der Parameter θ₁ entspricht dem ausgezeichneten Projektionswinkel φₛ und der Parameter θ₀ lässt sich aus dem Maximum der analytischen Funktion f(φ) bestimmen. Der Parameter θ₀ bildet also eine Art Normierung der analytischen Funktion f(φ), der Parameter θ₁ bildet das Zentrum der analytischen Funktion f(φ) und der Parameter θ₂ repräsentiert die Breite der analytischen Funktion f(φ).

Ebenfalls bevorzugt wird die analytische Funktion f(φ) durch einen Gewichtungsfaktor W(φ, c) normiert, wobei der Gewichtungsfaktor W(φ, c) eine Funktion der winkelnormalisierten Durchstrahlungslänge D(φ, c) ist.

Für die korrigierten Projektionsmessdaten P_{corr}(φ, c) ergibt sich folgende Gleichung: ${P}_{corr} \left(φ, c\right) = P \left(φ, c\right) + f \left(φ\right) * W \left(φ, c\right) .$ (5)

Unter der Annahme, dass lediglich das Metallobjekt für die beobachtete Abweichung verantwortlich ist, muss sich der Betrag der Abweichung pro Projektionswinkel auf jene Kanäle c eines Projektionswinkels φ verteilen, die durch die Metall-Sinogrammmaske M(φ, c) maskiert sind. Für die entsprechende Kanalsumme muss folglich gelten, dass Σ*_{c} W*(*φ, c*) = 1 für alle Projektionswinkel φ erfüllt ist.

Bevorzugt ist der Zusammenhang zwischen dem Gewichtungsfaktor W(φ, c) und der winkelnormalisierten Durchstrahlungslänge D(φ, c) linear. In diesem Fall ergibt sich die Gewichtung W(φ, c) wie folgt: $W \left(φ, c\right) = \frac{D \left(φ, c\right)}{{\sum }_{c} D \left(φ, c\right)} .$ (6)

Die skalare Systematik der metallinduzierten Abweichung der Abschwächung wird also für einen Projektionswinkel φ entsprechend der Verteilung der Durchstrahlungslänge D(φ, c) innerhalb des Projektionswinkels φ auf die Kanäle c des Röntgendetektors des CT-Systems verteilt.

In einer alternativen Ausgestaltung wird der Zusammenhang zwischen dem Gewichtungsfaktor W(φ, c) und der winkelnormalisierten Durchstrahlungslänge D(φ, c) dagegen nichtlinear, vorzugsweise quadratisch, ebenfalls bevorzugt exponentiell ausgeprägt. In diesem Fall erfahren Sinogrammpixel, denen eine größere Durchstrahlungslänge D(φ, c) durch Metall zugeordnet ist, eine unterproportional oder überproportional stärkere Korrektur im Vergleich zu einem linearen Zusammenhang zwischen dem Gewichtungsfaktor W(φ, c) und der winkelnormalisierten Durchstrahlungslänge D(φ, c).

In einer bevorzugten Ausgestaltung der erfindungsgemäßen Korrektureinrichtung umfasst die Korrektureinheit eine Winkelbereichsfestlegungseinheit zum Festlegen eines Projektionswinkelbereichs b um den ermittelten ausgezeichneten Projektionswinkel φₛ herum, wobei der Projektionswinkelbereich b einen ersten Randwinkel φ₀ und einen zweiten Randwinkel φ₁ umfasst.

Die Korrektureinheit der erfindungsgemäßen Korrektureinrichtung weist vorzugsweise auch eine Summeneinheit zum Ermitteln der Kanalsumme zum Ermitteln eines Werts einer sogenannten winkelabhängigen initialen Kanalsumme ψ(φ) der eingangs empfangenen CT-Projektionsmessdaten P(φ, c) über alle Kanäle c zumindest für den vorgenannten ersten Randwinkel φ₀ und zweiten Randwinkel φ₁ sowie mindestens für einen innerhalb des festgelegten Projektionswinkelbereichs b vorliegenden Projektionswinkel φ auf. Für allgemeine Winkel φ hat die initiale Kanalsumme ψ(φ) die in Gleichung (1) beschriebene Gestalt.

Wie bereits erwähnt, repräsentiert die initiale Kanalsumme ψ(φ) gerade die Summe aller empfangenen CT-Projektionsmessdaten P(φ, c) für alle Kanäle c für einen Projektionswinkel φ. Die Werte der initialen Kanalsumme ψ(φ) für die Randwinkel φ_{0,} φ₁ bilden einen ersten Kanalsummen-Randwert ψ(φ₀) und einen zweiten Kanalsummen-Randwert ψ(φ₁) der initialen Kanalsumme ψ(φ).

Wie bereits erläutert, erstreckt sich der Projektionswinkelbereich b von dem Wert φ₀ = φₛ - Δφ bis zu dem Wert φ₁ = φₛ + Δφ. Der Wert Δφ beschreibt gerade die halbe Breite des Projektionswinkelbereichs b. Die Festlegung des Projektionswinkelbereichs b erfolgt auf Basis von Vorabinformationen über die Ausdehnung der systematischen Abweichung der Röntgenschwächung der CT-Projektionsmessdaten P(φ, c) von einer artefaktfreien Röntgenschwächung über einen bestimmten Winkelbereich der Projektionswinkel φ. Der Projektionswinkelbereich b definiert den Winkelbereich, für den eine Systematik, d.h. eine Abweichung der initialen Kanalsumme ψ(φ) von einem korrekten Abschwächungswert zu erwarten ist. Der Projektionswinkelbereich b lässt sich empirisch ermitteln.

Teil der Korrektureinheit der erfindungsgemäßen Korrektureinrichtung ist auch bevorzugt eine Interpolationseinheit zum Ermitteln einer systematikfreien Kanalsumme ψₖ(φ), welche durch eine Interpolation ermittelt wird, welche auf Basis des ersten Randwerts ψ(φ₀) und des zweiten Randwerts ψ(φ₁) erfolgt.

Wie bereits erwähnt, können die Randwerte vor der Interpolation durch Filterung entsprechend bearbeitet werden. Die Interpolation kann vorzugsweise eine lineare Interpolation zwischen den beiden Randwerten aufweisen. Wie bereits erwähnt, gleicht die systematikfreie Kanalsumme ψₖ(φ) anschaulich gesprochen die Abweichung der Abschwächungswerte von Abschwächungswerten, welche ohne artefakterzeugende Systematik gemessen würden, in dem ermittelten Projektionswinkelbereich b aus.

Darüber hinaus umfasst die Korrektureinheit der erfindungsgemäßen Korrektureinrichtung vorzugsweise eine Differenzeinheit zum Ermitteln eines Differenzterms Δψ(φ) auf Basis der initialen Kanalsumme ψ(φ) und der korrigierten Kanalsumme ψₖ(φ) als Eingangswerte. Wie bereits erwähnt, kann die initiale Kanalsumme ψ(φ) durch eine Filterung bearbeitet werden.

Ebenfalls bevorzugt ist die bereits erläuterte Korrekturtermeinheit der erfindungsgemäßen Korrektureinrichtung dazu eingerichtet, den Korrekturterm fₖ(φ) auf Basis des Differenzterms Δψ(φ) zu ermitteln. Wie bereits erwähnt, kann der Korrekturterm fₖ(φ) den Differenzterm Δψ(φ) in der einfachsten Ausführungsform einfach ungeändert übernehmen. Vorzugsweise erfolgt aber eine modellhafte Nachbildung des Differenzterms Δψ(φ) durch den Korrekturterm fₖ(φ).

Die vorstehend beschriebene Variante der erfindungsgemäßen Korrektureinrichtung erlaubt eine einfache Abschätzung einer systematischen Abweichung der Abschwächungswerte im Bereich des ausgezeichneten Projektionswinkels φₛ, welche durch die Metallartefakte bedingt ist, durch eine Interpolation zwischen den Randwerten ψ(φ₀), ψ(φ₁) der initialen Kanalsumme ψ(φ) in dem Projektionswinkelbereich b und einen Vergleich des Ergebnisses der Interpolation mit den in dem Projektionswinkelbereich b tatsächlich gemessenen bzw. ermittelten Werten der initialen Kanalsumme ψ(φ).

Die Erfindung wird im Folgenden unter Hinweis auf die beigefügten Figuren anhand von Ausführungsbeispielen noch einmal näher erläutert. Es zeigen:
- FIG 1: ein Schaubild, welches für eine feste Detektorzeile aufsummierte Röntgenschwächungsdaten als Funktion des Projektionswinkels veranschaulicht,
- FIG 2: eine herkömmliche CT-Aufnahme eines Phantoms mit einer Interventionsnadel,
- FIG 3: zwei Vergleichsbilder der in FIG 2 bereits gezeigten CT-Aufnahme, einmal ohne Korrektur und einmal mit Korrektur,
- FIG 4: ein Schaubild, welches die Ermittlung eines Differenzterms Δψ(φ) auf Basis einer Differenz der initialen Kanalsumme ψ(φ) und der systematikfreien Kanalsumme ψₖ(φ) zur Generierung von korrigierten CT-Projektionsmessdaten P_{corr}(φ, c) veranschaulicht,
- FIG 5: ein Flussdiagramm, welches ein Verfahren zum Ermitteln von korrigierten CT-Projektionsmessdaten P_{corr}(φ, c) gemäß einem Ausführungsbeispiel der Erfindung veranschaulicht,
- FIG 6: ein Flussdiagramm, welches ein Verfahren zum Durchführen einer CT-Bildgebung gemäß einem Ausführungsbeispiel der Erfindung veranschaulicht,
- FIG 7: eine schematische Darstellung einer Korrektureinrichtung gemäß einem Ausführungsbeispiel der Erfindung,
- FIG 8: eine schematische Darstellung eines CT-Systems gemäß einem Ausführungsbeispiel der Erfindung.

In FIG 1 ist ein Schaubild 10 gezeigt, welches für eine feste Detektorzeile aufsummierte Röntgenschwächungsdaten, also eine Kanalsumme ψ (in Arbitrary Units, abgekürzt mit "AU", im Deutschen "willkürliche Einheiten") als Funktion des Projektionswinkels von 0 bis 360 Grad bzw. als Funktion der Nummer x der Projektion, welche proportional zum Projektionswinkel ist, veranschaulicht. Die Röntgenschwächungsdaten, welche die Messwerte von im Rahmen einer CT-Bildgebung akquirierten Projektionsmessdaten wiedergeben, sind von einem Untersuchungsbereich aufgenommen worden, in dem sich ein längliches Metallobjekt mit einer Längsachse, in diesem Beispiel eine Metallnadel mit einer langen Nadelachse, befindet.

Integriert man die Röntgenschwächungsdaten über die Kanäle des Röntgenprojektors je Projektionswinkel, so weisen Projektionen, die das Metall mit großen Durchstrahlungslängen sehen, in logischer Konsequenz weniger Gesamtschwächung auf als andere Projektionen, die das Metall mit kleinen Durchstrahlungslängen sehen. Dies liegt daran, dass bei einer Projektion mit kleinen Durchstrahlungslängen relativ viele Pixel bzw. Sensorpixel eine Abschwächung mit Metallanteil aufweisen, bei einer Projektion mit einer großen Durchstrahlungslänge nur einige wenige Pixel eines Röntgendetektors eine Abschwächung mit Metallanteil umfassen. Die Abschwächung, welche von den wenigen Pixeln des Röntgendetektors detektiert wird, trägt aufgrund der Sättigung der Röntgenschwächung nur einen unterproportionalen Anteil je Durchstrahlungslänge zur Kanalsumme ψ bei im Vergleich zu den Abschwächungen, welche von den relativ vielen Pixeln des Röntgendetektors gesehen werden, welche eine relativ kleine Durchstrahlungslänge sehen, die aber nicht zu einer Sättigung der Röntgenschwächung führt.

Wie in FIG 1 zu erkennen ist, gibt es zwei Minima der Abschwächung bei x = 300 und x = 1300, eben jenen Projektionen parallel zur langen Nadelachse mit den größten Durchstrahlungslängen durchs Metall. Die Abweichung des Verlaufs der Röntgenschwächung von einem konstanten Wert wird auch als systematische Unterschätzung der Röntgenschwächung oder auch wie erwähnt kurz als "Systematik" bezeichnet.

In FIG 2 ist ein Bild 20 einer herkömmlichen CT-Aufnahme eines Phantoms mit einer Interventionsnadel gezeigt. In der langen Achse der Interventionsnadel treten dunkle lang gezogene Bildartefakte 21 auf, während quer zur langen Objektachse helles Überstrahlen 22 beobachtet wird. Die gezeigten Artefakte sind in der Regel besonders kritisch, da die klinisch relevanten Informationen meist direkt hinter der langen Objektachse liegen und durch die Artefakte verdeckt werden.

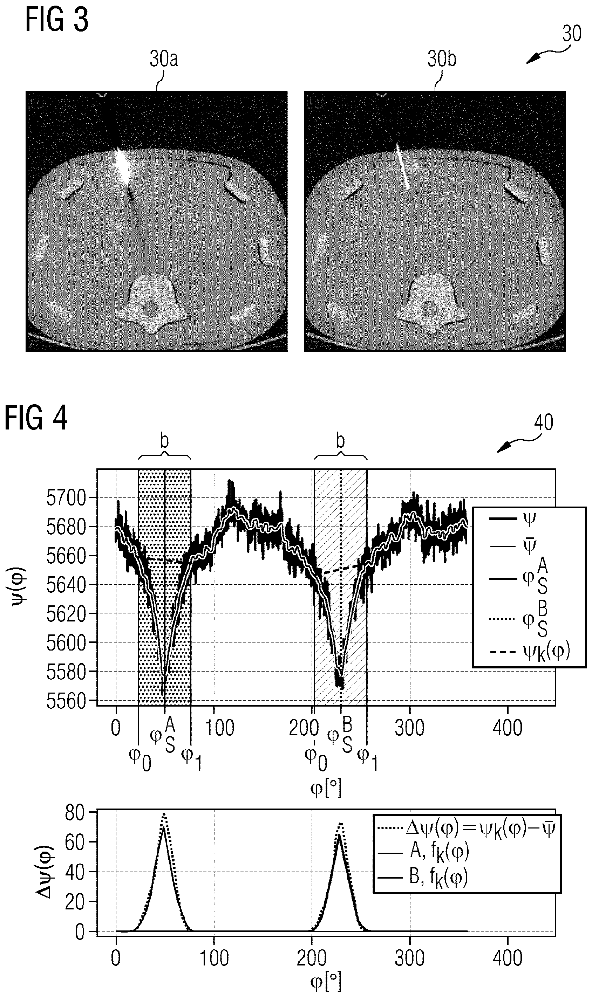

In FIG 3 ist eine Darstellung 30 mit zwei Vergleichsbildern 30a, 30b der in FIG 2 bereits gezeigten Aufnahme einmal ohne Korrektur (links, Vergleichsbild 30a) und einmal mit Korrektur (rechts, Vergleichsbild 30b) dargestellt. Die extremen dunklen und hellen Artefakte konnten durch die Korrektur im Vergleichsbild 30a rechts erfolgreich verhindert werden. Eine Beurteilung der Anatomie in der Umgebung der Nadelspitze wird so erst möglich.

In FIG 4 ist ein Schaubild 40 gezeigt, welches die Ermittlung einer Korrektur von CT-Projektionsmessdaten veranschaulicht. Das Schaubild 40 umfasst ein oberes Teilschaubild und ein unteres Teilschaubild. In dem oberen Teilschaubild ist die winkelabhängige initiale Kanalsumme ψ(φ) bzw. die Röntgenschwächung über die Kanäle eines Röntgendetektors eines CT-Systems integriert in Abhängigkeit von einem Projektionswinkel φ in Grad (mit 360 ° für einen Vollkreis) veranschaulicht. Neben der initialen Kanalsumme ψ(φ) ist in FIG 4 in dem oberen Teilschaubild auch eine gefilterte Kanalsumme ψ̅(*φ*) graphisch veranschaulicht, die die sehr volatile initiale Kanalsumme ψ(φ) anschaulich gesprochen glättet. Weiterhin sind in FIG 4 in dem oberen Schaubild Projektionswinkelbereiche b eingezeichnet, welche um einen ersten Projektionswinkel ${φ}_{S}^{A}$ und einen zweiten Projektionswinkel ${φ}_{S}^{B}$ herum ausgebildet sind. Der erste Projektionswinkel ${φ}_{S}^{A}$ und der zweite Projektionswinkel ${φ}_{S}^{B}$ sind in einander entgegengesetzten Längsrichtungen A, B des Metallobjekts ausgerichtet, welches in einem von dem CT-System abgebildeten Untersuchungsbereich angeordnet ist. Weiterhin sind in FIG 4 systematikfreie Kanalsummen ψₖ(φ) in den Projektionswinkelbereichen b gestrichelt eingezeichnet, welche durch eine lineare Interpolation zwischen den beiden Randwerten der Kanalsummen von φ₀ und φ₁ darstellen und die "Einbrüche" der Abschwächung in den Projektionswinkelbereichen b kompensieren.

In dem unteren Teilschaubild ist die Systematik als Differenzterm Δψ(φ) jeweils für beide Projektionswinkelbereiche b bzw. beide Längsrichtungen A, B des Metallobjekts, bzw. als Differenzterm Δψ(φ) zwischen der systematikfreien Kanalsumme ψₖ(φ) und der gefilterten Kanalsumme ψ̅(*φ*) in Abhängigkeit vom Projektionswinkel φ in Grad dargestellt. Weiterhin sind die modellierten Korrekturterme fₖ(φ) für beide Längsrichtungen A, B dargestellt.

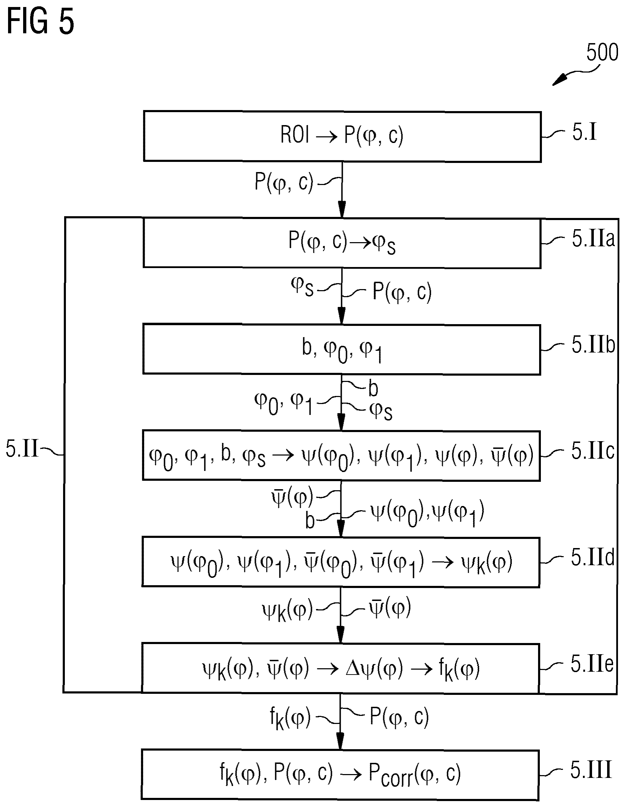

In FIG 5 ist ein Flussdiagramm 500, welches ein Verfahren zum Ermitteln von korrigierten CT-Projektionsmessdaten gemäß einem spezifischen Ausführungsbeispiel der Erfindung veranschaulicht, abgebildet.

Bei dem Schritt 5.1 werden CT-Projektionsmessdaten P(φ, c) empfangen, die von einem Untersuchungsbereich ROI erfasst wurden.

Anschließend erfolgt bei dem Schritt 5.11 ein Ermitteln eines Korrekturterms fₖ(φ). Der Korrekturterm fₖ(φ) wird auf Basis einer systematischen Abweichung bzw. einem Differenzterm Δψ(φ) (siehe Teilschritt 5.IIe) von Abschwächungswerten der CT-Projektionsmessdaten P(φ, c) gegenüber Abschwächungswerten der CT-Projektionsmessdaten, welche bei Abwesenheit der Artefakte des Metallobjekts auftreten würden, modelliert. Der Schritt 5.II umfasst in dem in FIG 5 veranschaulichten ausführlichen Ausführungsbeispiel eine Reihe von Teilschritten 5.IIa bis 5.lle, die im Folgenden im Detail erläutert werden.

Bei dem Teilschritt 5.IIa erfolgt zunächst ein Ermitteln eines ausgezeichneten Projektionswinkels φ_{S} der empfangenen CT-Projektionsmessdaten P(φ, c). Der ausgezeichnete Projektionswinkel φ_{S} entspricht einer zu der Längsachse eines in dem Untersuchungsbereich befindlichen Metallobjekts parallelen Projektionsrichtung. Wie bereits ausführlich erläutert, kann eine Ermittlung des ausgezeichneten Projektionswinkels φ_{S} der empfangenen CT-Projektionsmessdaten P(φ, c) gemäß der obenstehenden Gleichung (2) erfolgen.

Bei dem Teilschritt 5.IIb wird ein Projektionswinkelbereich b um den ausgezeichneten Projektionswinkel φ_{S} herum festgelegt, wobei ein erster Randwinkel φ₀ und ein zweiter Randwinkel φ₁ des Projektionswinkelbereichs b ermittelt und festgelegt werden.

Weiterhin wird bei dem Schritt 5.IIc eine initiale Kanalsumme ψ(φ) der CT-Projektionsmessdaten P(φ, c) für den Projektionswinkelbereich b ermittelt. Wie bereits erläutert, umfasst die initiale Kanalsumme ψ(φ) die Summe der Projektionsmessdaten P(φ, c) aller Kanäle für einen Projektionswinkel φ. Dabei werden in dem in FIG 5 gezeigten Ausführungsbeispiel Werte der initialen Kanalsumme ψ(φ) für alle in dem Projektionswinkelbereich b liegenden Projektionswinkel φ berechnet, um eine besonders fein abgestimmte Korrektur durchführen zu können. Insbesondere werden ein erster Randwert ψ(φ₀) der initialen Kanalsumme ψ(φ) für den ersten Randwinkel φ₀ des Projektionswinkelbereichs b und ein zweiter Randwert ψ(φ₁) der initialen Kanalsumme ψ(φ) für den zweiten Randwinkel φ₁ des Projektionswinkelbereichs b berechnet. Zudem werden auch Zwischenwerte der initialen Kanalsumme ψ(φ) für zwischen den beiden Randwinkeln φ₀, φ₁ liegende Projektionswinkel φ, insbesondere für den ausgezeichneten Projektionswinkel φ_{S}, berechnet.

Außerdem werden gemäß der obenstehend aufgeführten Gleichung (3) jeweils für die ermittelten Werte der initialen Kanalsumme ψ(φ) entsprechende gefilterte Werte ψ(φ) der initialen Kanalsumme ψ(φ) ermittelt.

Anschließend wird bei dem Teilschritt 5.IId eine systematikfreie Kanalsumme ψₖ(φ) auf Basis von dem ersten und dem zweiten Randwert ψ(φ₀), ψ(φ₁) zugeordneten gemittelten bzw. gefilterten Randwerten ψ̅(φ₀), ψ̅(φ₁) ermittelt. Die systematikfreie Kanalsumme ψₖ(φ) wird bei diesem veranschaulichten Ausführungsbeispiel insbesondere durch eine lineare Interpolation zwischen den beiden gemittelten Randwerten ψ̅(φ₀), ψ̅(φ₁) ermittelt. Die gemittelten Randwerte ψ̅(φ₀), ψ̅(φ₁) werden wie obenstehend beschrieben, gemäß Gleichung (3) durch eine Filterung ermittelt.

Bei dem Schritt 5.IIe wird ein Differenzterm Δψ(φ) als Differenz zwischen den gefilterten Werten ψ̅(φ) der initialen Kanalsumme ψ(φ) und der systematikfreien Kanalsumme ψₖ(φ) ermittelt. Darüber hinaus wird auch ein Korrekturterm fₖ(φ) auf Basis des Differenzterms Δψ(φ) ermittelt. Die Modellierung des Korrekturterms fₖ(φ) erfolgt dabei gemäß der obenstehenden Gleichung (4).

Schließlich erfolgt bei dem Schritt 5.III ein Ermitteln von korrigierten CT-Projektionsmessdaten P_{corr}(φ, c) durch Addition des Korrekturterms fₖ(φ) zu den empfangenen CT-Projektionsmessdaten P(φ, c).

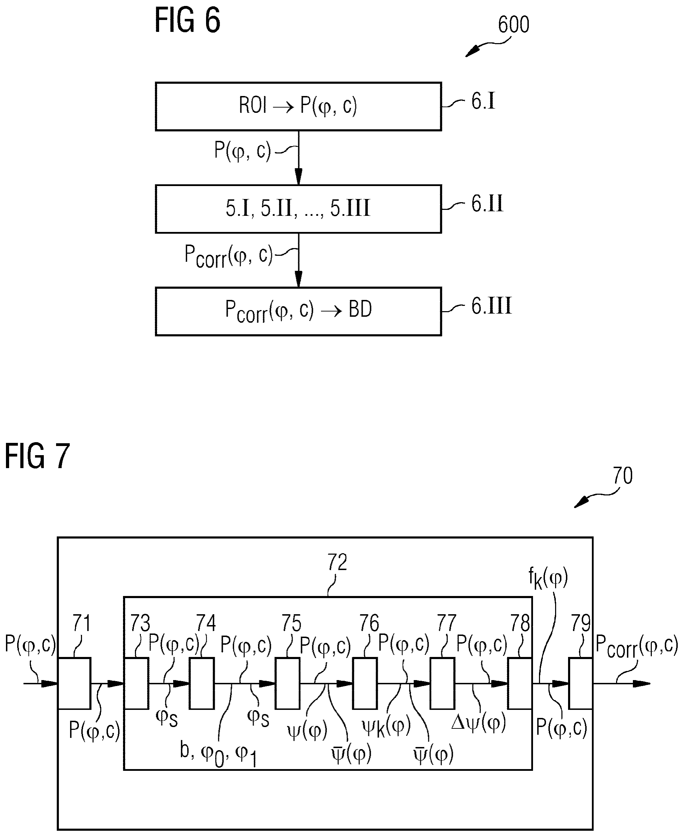

In FIG 6 ist ein Flussdiagramm 600 gezeigt, welches ein Verfahren zum Durchführen einer CT-Bildgebung gemäß einem Ausführungsbeispiel der Erfindung veranschaulicht.

Bei dem Schritt 6.1 werden CT-Projektionsmessdaten P(φ, c) von einem Untersuchungsbereich ROI durch eine Scaneinheit eines CT-Systems akquiriert.

Bei dem Schritt 6.II erfolgt eine Anwendung des erfindungsgemäßen Verfahrens zum Ermitteln von korrigierten CT-Projektionsmessdaten P_{corr}(φ, c), wie es in FIG 5 veranschaulicht ist, auf die akquirierten CT-Projektionsmessdaten P(φ, c).

Bei dem Schritt 6.III erfolgt eine Rekonstruktion von artefaktreduzierten CT-Bilddaten BD auf Basis der korrigierten CT-Projektionsmessdaten P_{corr}(φ, c).

In FIG 7 ist eine schematische Darstellung einer Korrektureinrichtung 70 gemäß einem Ausführungsbeispiel der Erfindung veranschaulicht.

Die Korrektureinrichtung 70 umfasst eine Eingangsschnittstelle 71 zum Empfangen von CT-Projektionsmessdaten P(φ, c) von einem Untersuchungsbereich.

Die Korrektureinrichtung 70 weist außerdem eine Korrektureinheit 72 zum Ermitteln eines Korrekturterms fₖ(φ) zur Korrektur von Metallartefakten in den empfangenen CT-Projektionsmessdaten P(φ, c) auf. Der Korrekturterm fₖ(φ) repräsentiert eine artefakterzeugende systematische Abweichung von Abschwächungswerten der CT-Projektionsmessdaten P(φ, c) gegenüber Abschwächungswerten der CT-Projektionsmessdaten, welche bei Abwesenheit der metallinduzierten Systematik auftreten würden.

Die Korrektureinheit 72 umfasst eine Mehrzahl von Untereinheiten, mit denen die im Zusammenhang mit FIG 5 veranschaulichten Teilschritte 5.IIa bis 5.IIe ausgeführt werden.

Die Korrektureinheit 72 umfasst somit eine Winkelfestlegungseinheit 73 zum Ermitteln des Projektionswinkels φ_{S} der CT-Projektionsmessdaten P(φ, c) in Richtung einer zu der Längsachse des Metallobjekts parallelen Projektionsrichtung.

Die Korrektureinheit 72 umfasst auch eine Winkelbereichsfestlegungseinheit 74 zum Festlegen eines Projektionswinkelbereichs b um den ausgezeichneten Projektionswinkel φ_{S} herum mit einem ersten Randwinkel φ₀ und einem zweiten Randwinkel φ₁.

Teil der Korrektureinheit 72 ist zudem eine Summeneinheit 75 zum Ermitteln der initialen Kanalsumme ψ(φ) der CT-Projektionsmessdaten P(φ, c) für den ersten Randwinkel φ₀ und den zweiten Randwinkel φ₁ sowie alle Projektionswinkel φ, φ_{S} zwischen den beiden Randwinkeln φ₀, φ₁. Wie bereits erläutert, umfasst die initiale Kanalsumme ψ(φ) alle CT-Projektionsmessdaten einer jeweiligen Projektion mit dem Projektionswinkel φ, und zwar aufsummiert über alle Kanäle c eines Röntgendetektors eines CT-Systems. Es werden also insbesondere auch ein erster Randwert ψ(φ₀) und ein zweiter Randwert ψ(φ₁) der initialen Kanalsumme ψ(φ) sowie Zwischenwerte ermittelt.

Die Summeneinheit 75 ist weiterhin auch dazu eingerichtet, auf Basis der initialen Kanalsumme ψ(φ) eine gefilterte Kanalsumme ψ̅(*φ*) für die genannten Projektionswinkel φ_{S}, φ, φ₀, φ₁ gemäß der obenstehenden Gleichung (3) zu ermitteln.

Die Korrektureinheit 72 umfasst überdies eine Interpolationseinheit 76 zum Ermitteln einer systematikfreien Kanalsumme ψₖ(φ) auf Basis von dem ersten und dem zweiten Randwert ψ(φ₀), ψ(φ₁) zugeordneten gemittelten Randwerten ψ̅(φ₀), ψ̅(φ₁) und einer linearen Interpolation zwischen den beiden gemittelten Randwerten ψ̅(φ₀), ψ̅(φ₁). Die gemittelten Randwerte ψ̅(φ₀), ψ̅(φ₁) werden wie obenstehend beschrieben, gemäß Gleichung (3) ermittelt.

Weiterhin umfasst die Korrektureinheit 72 eine Differenzeinheit 77 zum Ermitteln eines Differenzterms Δψ(φ) zwischen einer gemäß Gleichung (3) generierten gemittelten bzw. gefilterten Kanalsumme ψ̅(*φ*) und der systematikfreien Kanalsumme ψₖ(φ).

Zudem umfasst die Korrektureinheit 72 eine Korrekturtermeinheit 78 zum Ermitteln eines Korrekturterms fₖ(φ) durch eine Modellierung des ermittelten Differenzterms Δψ(φ) nach Gleichung (4).

Darüber hinaus weist die Korrektureinrichtung 70 eine Additionseinheit 79 auf zum Ermitteln von korrigierten CT-Projektionsmessdaten P_{corr}(φ, c) durch Addition des Korrekturterms fₖ(φ) zu den empfangenen CT-Projektionsmessdaten P(φ, c).

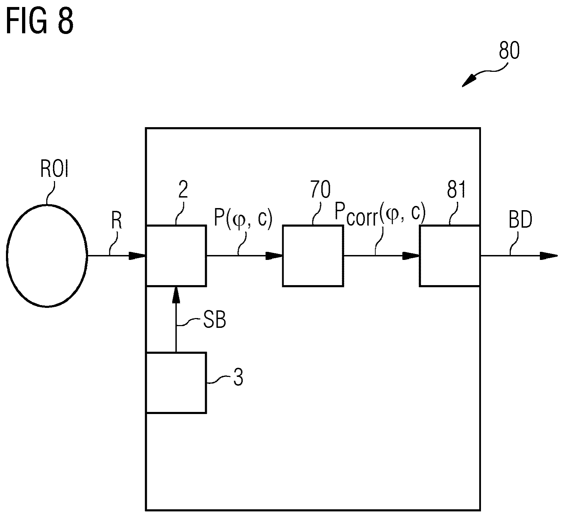

In FIG 8 ist eine schematische Darstellung eines CT-Systems 80 gemäß einem Ausführungsbeispiel der Erfindung gezeigt. Das CT-System 80 umfasst eine Scaneinheit 2 zum Akquirieren von CT-Projektionsmessdaten P(φ, c) von einem Untersuchungsbereich ROI. Hierzu wird der Untersuchungsbereich ROI von der Scaneinheit auf die bekannte Art und Weise einer CT-Bildgebung mit Röntgenstrahlung R durchleuchtet und es werden auf Basis von Sensorsignalen von Pixeln eines Röntgendetektors der Scaneinheit 2 die CT-Projektionsmessdaten P(φ, c) gewonnen. Außerdem weist das CT-System 80 eine Steuerungseinrichtung 3 zum Ansteuern der Scaneinheit 2 mit Hilfe von Steuerbefehlen SB auf. Teil des CT-Systems 80 ist auch eine in FIG 7 gezeigte Korrektureinrichtung 70 zur Gewinnung von korrigierten CT-Projektionsmessdaten P_{corr}(φ, c). Das CT-System 80 umfasst weiterhin eine Rekonstruktionseinheit 81 zur Rekonstruktion von artefaktreduzierten CT-Bilddaten BD auf Basis der korrigierten CT-Projektionsmessdaten P_{corr}(φ, c).

Es wird abschließend noch einmal darauf hingewiesen, dass es sich bei den vorbeschriebenen Verfahren und Vorrichtungen lediglich um bevorzugte Ausführungsbeispiele der Erfindung handelt und dass die Erfindung vom Fachmann variiert werden kann, ohne den Bereich der Erfindung zu verlassen, soweit er durch die Ansprüche vorgegeben ist. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Ebenso schließt der Begriff "Einheit" nicht aus, dass diese aus mehreren Komponenten besteht, die gegebenenfalls auch räumlich verteilt sein können. Unabhängig vom grammatikalischen Geschlecht eines bestimmten Begriffes sind Personen mit männlicher, weiblicher oder anderer Geschlechteridentität mit umfasst.

## Patentansprüche

1. Computerimplementiertes Verfahren zum Ermitteln von korrigierten CT-Projektionsmessdaten (P_{corr}(φ, c)), aufweisend die Schritte:
- Empfangen von CT-Projektionsmessdaten (P(φ, c)) von einem Untersuchungsbereich (ROI), welcher ein Metallobjekt mit einer Längsachse aufweist,
- Ermitteln eines Korrekturterms (fₖ(φ)) zur Korrektur einer metallartefakterzeugenden Systematik in den empfangenen CT-Projektionsmessdaten (P(φ, c)), aufweisend die Teilschritte:
- Ermitteln eines Projektionswinkels (φ_{S}) der empfangenen CT-Projektionsmessdaten (P(φ, c)), der einer zu der Längsachse des Metallobjekts parallelen Projektionsrichtung entspricht, und
- Ermitteln des Korrekturterms (fₖ(φ)) auf Basis des Projektionswinkels (φ_{S}) der empfangenen CT-Projektionsmessdaten (P(φ, c)),
- Ermitteln von korrigierten CT-Projektionsmessdaten (P_{corr}(φ, c)) durch Addition des Korrekturterms (fₖ(φ)) zu den empfangenen CT-Projektionsmessdaten (P(φ, c)).

2. Verfahren nach Anspruch 1, wobei das Ermitteln des Korrekturterms (fₖ(φ)) auf Basis des Projektionswinkels (φ_{S}) der empfangenen CT-Projektionsmessdaten (P(φ, c)) die folgenden Schritte umfasst:
- Festlegen eines Projektionswinkelbereichs (b) um den Projektionswinkel (φ_{S}) herum, wobei der Projektionswinkelbereich (b) einen ersten Randwinkel (φ₀) und einen zweiten Randwinkel (φ₁) umfasst,
- Ermitteln einer initialen Kanalsumme (ψ(φ)) der empfangenen CT-Projektionsmessdaten (P(φ, c)) für jeweils eine Anzahl von Projektionswinkeln (φ) innerhalb des festgelegten Projektionswinkelbereichs (b), wobei zumindest ein erster Kanalsummen-Randwert (ψ(φ₀)) der initialen Kanalsumme (ψ(φ)) für den ersten Randwinkel (φ₀) und ein zweiter Kanalsummen-Randwert (ψ(φ₁)) der initialen Kanalsumme (ψ(φ)) für den zweiten Randwinkel (φ₁) sowie zumindest ein Wert der initialen Kanalsumme (ψ(φ)) für einen Projektionswinkel (φ) zwischen dem ersten Randwinkel (φ₀) und dem zweiten Randwinkel (φ₁) ermittelt wird,
- Ermitteln einer systematikfreien Kanalsumme (ψₖ(φ)) für den festgelegten Projektionswinkelbereich (b) auf Basis einer Interpolation, welche auf dem ersten Kanalsummen-Randwert (ψ(φ₀)) und dem zweiten Kanalsummen-Randwert (ψ(φ₁)) basiert,
- Ermitteln eines Differenzterms (Δψ(φ)) auf Basis der initialen Kanalsumme (ψ(φ)) und der systematikfreien Kanalsumme (ψₖ(φ)),
- Ermitteln des Korrekturterms (fₖ(φ)) auf Basis des Differenzterms (Δψ(φ)).

3. Verfahren nach Anspruch 2, wobei der Korrekturterm (fₖ(φ)) durch eine modellhafte Nachbildung des Differenzterms (Δψ(φ)) ermittelt wird.

4. Verfahren nach Anspruch 2 oder 3, wobei die initiale Kanalsumme (ψ(φ)) einer Tiefpassfilterung unterzogen wird, wobei eine gefilterte Kanalsumme (ψ̅(*φ*)) ermittelt wird, welche die initiale Kanalsumme (ψ(φ)) ersetzt.

5. Verfahren nach einem der Ansprüche 2 bis 4, wobei der Projektionswinkelbereich (b) empirisch gewählt wird.

6. Verfahren nach einem der Ansprüche 1 bis 5, wobei das Ermitteln des Projektionswinkels (φ_{S}) der empfangenen CT-Projektionsmessdaten (P(φ, c)) die Teilschritte umfasst:
- Rekonstruieren von temporären Bilddaten auf Basis der empfangenen CT-Projektionsmessdaten (P(φ, c)),
- Ermitteln des Projektionswinkels (φ_{S}) der empfangenen CT-Projektionsmessdaten (P(φ, c)) auf Basis der temporären Bilddaten.

7. Verfahren nach Anspruch 6, wobei das Ermitteln des Projektionswinkels (φ_{S}) der empfangenen CT-Projektionsmessdaten (P(φ, c)) den Schritt einer Kl-basierten Ermittlung des Projektionswinkels (φ_{S}) auf Basis der temporären Bilddaten umfasst.

8. Verfahren nach Anspruch 6 oder 7, wobei das Ermitteln des Projektionswinkels (φ_{S}) der empfangenen CT-Projektionsmessdaten (P(φ, c)) zumindest einen der folgenden Schritte umfasst:
- Ermitteln einer binären Metall-Bildmaske des Metallobjekts auf Basis der temporären Bilddaten,
- Vorwärtsprojizieren der binären Metall-Bildmaske in den Projektionsmessdatenraum, wobei ein Sinogramm erzeugt wird, welches eine Durchstrahlungslänge des Metallobjekts wiedergibt,
- Ermitteln einer binären Metall-Sinogrammmaske in dem Sinogramm,
- Ermitteln der Anzahl der Sinogrammpixel je Projektionswinkel (φ), die Metall maskieren, auf Basis der binären Metall-Sinogrammmaske,
- Ermitteln des Projektionswinkels (φ_{S}) der CT-Projektionsmessdaten (P(φ, c)), der die geringste Zahl von maskierten Sinogrammpixeln umfasst, als den Projektionswinkel (φ_{S}) der CT-Projektionsmessdaten (P(φ, c)).

9. Verfahren nach Anspruch 8, wobei
- die binäre Metall-Bildmaske in den temporären Bilddaten (Iₜₘₚ) dadurch ermittelt wird, dass Bilddatenpixeln, deren Abschwächung, vorzugsweise Graustufenwert, oberhalb von einem vorbestimmten Schwellwert liegt, der Wert "1" zugewiesen wird, und Bilddatenpixeln, deren Abschwächung, vorzugsweise Graustufenwert, unterhalb von dem vorbestimmten Schwellwert liegt, der Wert "0" zugewiesen wird
und/oder
- die Metall-Sinogrammmaske dadurch ermittelt wird, dass Sinogrammpixeln, deren Abschwächung oberhalb von einem vorbestimmten Schwellwert liegt, der Wert "1" zugewiesen wird, und Sinogrammpixeln, deren Abschwächung unterhalb von dem vorbestimmten Schwellwert liegt, der Wert "0" zugewiesen wird.

10. Verfahren nach einem der Ansprüche 1 bis 9, wobei der Korrekturterm (fₖ(φ)) so gewählt wird, dass er eine analytische Funktion (f(φ)) und einen Gewichtungsfaktor umfasst, und vorzugsweise der Gewichtungsfaktor so gewählt wird, dass er den Korrekturterm (fₖ(φ)) normiert und eine Funktion einer winkelnormalisierten Durchstrahlungslänge des Metallobjekts ist.

11. Computerimplementiertes Verfahren zum Durchführen einer CT-Bildgebung, aufweisend die Schritte:
- Akquirieren von CT-Projektionsmessdaten (P(φ, c)) von einem Untersuchungsbereich (ROI),
- Anwenden des Verfahrens nach einem der Ansprüche 1 bis 10 auf die akquirierten CT-Projektionsmessdaten (P(φ, c)) als empfangene CT-Projektionsmessdaten (P(φ, c)), wobei korrigierte CT-Projektionsmessdaten (P_{corr} (φ, c)) ermittelt werden,
- Rekonstruktion von CT-Bilddaten (BD) auf Basis der korrigierten CT-Projektionsmessdaten (P_{corr} (φ, c)).

12. Korrektureinrichtung (70), aufweisend:
- eine Eingangsschnittstelle (71) zum Empfangen von CT-Projektionsmessdaten (P(φ, c)) von einem Untersuchungsbereich (ROI), welcher ein Metallobjekt mit einer Längsachse aufweist,
- eine Korrektureinheit (72) zum Ermitteln eines Korrekturterms (fₖ(φ)) zur Korrektur einer metallartefakterzeugenden Systematik in den empfangenen CT-Projektionsmessdaten (P(φ, c)), aufweisend:
- eine Winkelfestlegungseinheit (73) zum Ermitteln eines Projektionswinkels (φ_{S}) der empfangenen CT-Projektionsmessdaten (P(φ, c)), der einer zu der Längsachse des Metallobjekts parallelen Projektionsrichtung entspricht,
- eine Korrekturtermeinheit (78) zum Ermitteln des Korrekturterms (fₖ(φ)) auf Basis des Projektionswinkels (φ_{S}) der empfangenen CT-Projektionsmessdaten (P(φ, c)),
- eine Additionseinheit (79) zum Ermitteln von korrigierten CT-Projektionsmessdaten (P_{corr}(φ, c)) durch Addition des Korrekturterms (fₖ(φ)) zu den empfangenen CT-Projektionsmessdaten (P(φ, c)).

13. CT-System (80), aufweisend:
- eine Scaneinheit (2) zum Akquirieren von CT-Projektionsmessdaten (P(φ, c)) von einem Untersuchungsbereich (ROI),
- eine Steuerungseinrichtung (3) zum Ansteuern der Scaneinheit (2) zum Akquirieren der CT-Projektionsmessdaten (P(φ, c)),
- eine Korrektureinrichtung (70) nach Anspruch 12 zur Gewinnung von korrigierten CT-Projektionsmessdaten (P_{corr}(φ, c)) auf Basis der von der Scaneinheit (2) akquirierten CT-Projektionsmessdaten (P(φ, c)) als empfangene CT-Projektionsmessdaten (P(φ, c)),
- eine Rekonstruktionseinheit (81) zur Rekonstruktion von artefaktreduzierten CT-Bilddaten (BD) auf Basis der korrigierten CT-Projektionsmessdaten (P_{corr}(φ, c)).

14. Computerprogrammprodukt, umfassend Befehle, die bei der Ausführung des Programms durch einen Computer diesen veranlassen, die Schritte des Verfahrens nach einem der Ansprüche 1 bis 11, insbesondere den Schritt zum Ermitteln eines Korrekturterms (fₖ(φ)) zur Korrektur einer metallartefakterzeugenden Systematik in den empfangenen CT-Projektionsmessdaten (P(φ, c)) und den Schritt zum Ermitteln von korrigierten CT-Projektionsmessdaten (P_{corr}(φ, c)) durch Addition des Korrekturterms (fₖ(φ)) zu den empfangenen CT-Projektionsmessdaten (P(φ, c)), auszuführen.

15. Computerlesbares Speichermedium, umfassend Befehle, die bei der Ausführung durch einen Computer diesen veranlassen, die Schritte des Verfahrens nach Anspruch 1 bis 11 insbesondere den Schritt zum Ermitteln eines Korrekturterms (fₖ(φ)) zur Korrektur einer metallartefakterzeugenden Systematik in den empfangenen CT-Projektionsmessdaten (P(φ, c)) und den Schritt zum Ermitteln von korrigierten CT-Projektionsmessdaten (P_{corr}(φ, c)) durch Addition des Korrekturterms (fₖ(φ)) zu den empfangenen CT-Projektionsmessdaten (P(φ, c)), auszuführen.
